# EUROPEAN PATENT APPLICATION

(11) **EP 4 513 320 A1**
(43) Date of publication of application: **26.02.2025**
(21) Application number: 24195563.2
(22) Date of filing: 21.08.2024
(51) Int. Cl.: G06F 3/06, G06F 9/46, G06F 16/23

(54) **INFORMATION PROCESSING EQUIPMENT**

(30) Priority: 23.08.2023 JP 2023135415
(71) Applicant: TOYOTA JIDOSHA KABUSHIKI KAISHA, Aichi-ken, 471-8571 (JP)
(72) Inventor: TAMAO, Junichiro, Toyota-shi, 471-8571 (JP); NAKABAYASHI, Ryota, Toyota-shi, 471-8571 (JP)
(74) Representative: TBK

(57) **Abstract**

An information processing device mounted on a vehicle includes a storage device on which data is rewritable on a cell-by-cell basis, in which the information processing device is configured to manage the storage device, and execute collecting pieces of data from each of a plurality of applications executed in the vehicle at a collecting timing, integrating the collected pieces of data into one piece of integrated data, executing a first command to request writing of the integrated data into the storage device, and executing a second command to immediately execute the writing of the integrated data into the storage device based on the first command.

## Description

### BACKGROUND OF THE INVENTION

### 1. Field of the Invention

The present invention relates to an information processing device.

### 2. Description of Related Art

In recent years, a NAND type flash memory has been widely used as a storage device, such as a universal serial bus (USB) memory, a safe driver (SD) card, and a flash solid state drive (SSD). Japanese Unexamined Patent Application Publication No. 2016-9457 (JP 2016-9457 A) discloses a technique for merging data to be written before writing data in order to efficiently use a storage area of a cache memory used for writing processing to a NAND type flash memory.

### SUMMARY OF THE INVENTION

Meanwhile, there is an upper limit to the number of times of writing of a NAND type flash memory. Therefore, in an information processing device including a NAND type flash memory, a frequency of writing data into the memory may be reduced.

An aspect of the present invention relates to an information processing device including a storage device on which data is rewritable on a cell-by-cell basis. The information processing device is mounted on a vehicle and is configured to manage the storage device, and execute collecting pieces of data from each of a plurality of applications executed in the vehicle at a collecting timing, integrating the collected pieces of data into one piece of integrated data, executing a first command, and executing a second command. The first command is a command to request writing of the integrated data into the storage device. The second command is a command to immediately execute the writing of the integrated data into the storage device based on the first command.

According to the aspect of the present invention, a frequency of writing data into the storage device can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram used to describe a vehicle equipped with an information processing device;
FIG. 2 is a flowchart used to describe writing processing; and
FIG. 3 is a flowchart used to describe reading processing.

### DETAILED DESCRIPTION OF EMBODIMENTS

### Embodiment

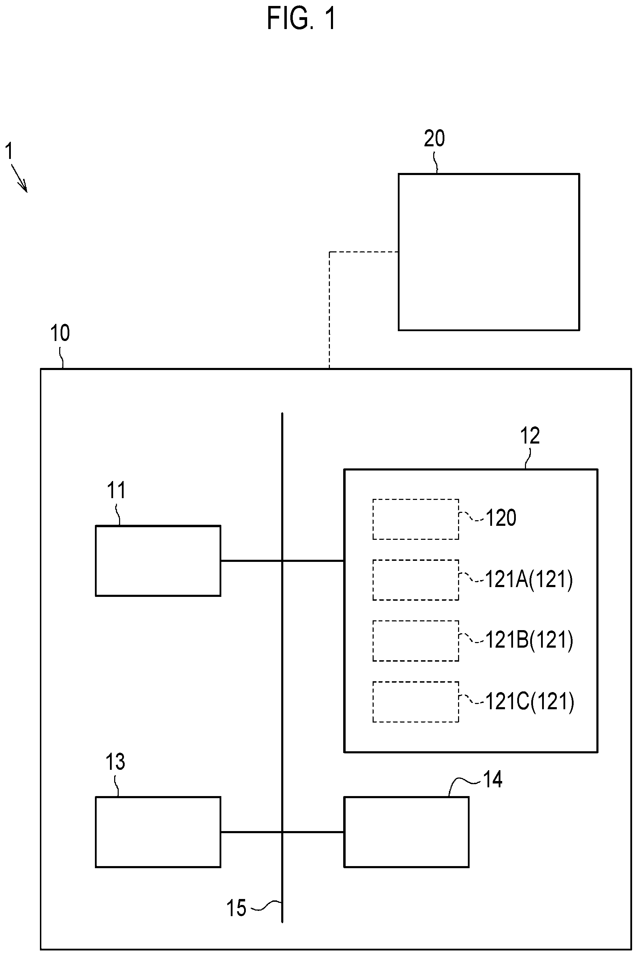

Hereinafter, an embodiment of an information processing device will be described with reference to FIGS. 1 to 3.

### Entire Configuration of Vehicle 1

As shown in FIG. 1, the vehicle 1 includes, for example, an information processing device 10 and a power supply device 20 that supplies power to the information processing device 10. The information processing device 10 is, for example, a computer including a central processing unit (CPU) 11, a read only memory (ROM) 12, a random access memory (RAM) 13, and a storage device 14. Various configurations provided in the information processing device 10 can communicate with each other via an internal bus 15.

The ROM 12 stores a plurality of programs that is executed in the vehicle 1. The information processing device 10 implements various functions by the CPU 11 executing each program. The "function" referred to here includes a function relating to traveling of the vehicle 1 and a function of automatically updating firmware of the vehicle 1. Hereinafter, it is assumed that the ROM 12 stores a program that implements an integration application 120 that implements a data integration function, a program that implements an application 121A that implements a first function, a program that implements an application 121B that implements a second function, and a program that implements an application 121C that implements a third function, in advance. The programs stored in the ROM 12 is examples, and the present invention is not limited thereto. In the following description, when the application 121A, the application 121B, and the application 121C are not distinguished from each other, the application 121A, the application 121B, and the application 121C are simply described as applications 121.

The storage device 14 can store various programs and various kinds of data. The storage device 14 is a non-volatile memory in which data can be electrically rewritten on a cell-by-cell basis. Specifically, the storage device 14 is implemented by a NAND type flash memory. Therefore, the storage device 14 has an upper limit number of times of writing. The number of times of writing into the storage device 14 corresponds to the number of times of writing some kind of data into the same memory cell. Therefore, the "writing" includes writing information into an empty memory cell and overwriting the storage content of a memory cell into which information has already been written.

The power supply device 20 supplies power to various devices mounted on the vehicle 1. As a supply mode of power of the power supply device 20, a constant power mode and an auxiliary power mode are prepared. For example, when a user is not present near the vehicle 1 while the vehicle is not moving, the constant power mode is selected as the supply mode. On the other hand, when the user approaches the vehicle 1 in a situation where the constant power mode has been selected, the supply mode is changed from the constant power mode to the auxiliary power mode.

The constant power mode is a mode of supplying power to a part of in-vehicle devices even when the vehicle 1 is powered off. When the constant power mode is selected as the supply mode, power is supplied from the power supply device 20 to the information processing device 10 and a security device of the vehicle 1. On the other hand, when the auxiliary power mode is selected as the supply mode, the number of the in-vehicle devices to which power is supplied from the power supply device 20 is larger than the number is when the constant power mode is selected as the supply mode. The "in-vehicle device" as used herein includes both an electronic control device, such as the information processing device 10, and an in-vehicle actuator.

### Regarding Integration Application 120: Writing Processing

Hereinafter, writing processing of the integration application 120 will be described. The integration application 120 collects data to be written from each of a plurality of programs executed by the CPU 11, at a collecting timing. In this example, the programs are the application 121A, the application 121B, and the application 121C.

Here, in general, data used for each of the applications 121 implemented in the vehicle 1 and having a high importance in control of the vehicle 1 is requested to be appropriately stored in the storage device 14 at the collecting timing. The data having a high importance is, for example, total traveling distance information, power management information, storage-related metadata, and diagnosis information. Note that, the data having a high importance is an example, and the present invention is not limited thereto. The collecting timing is, for example, a timing at which a power switch of the vehicle 1 is turned off. An example of the power switch is an ignition switch.

The integration application 120 integrates pieces of data collected from the applications 121A, 121B, 121C at the collecting timing into one piece of integrated data. The integration application 120 executes a first command on the integrated data. The first command is a command to request writing of designated data into the storage device 14.

When the first command is executed, the designated data is written into the storage device 14. Meanwhile, a writing timing of the data is not strictly immediate. The writing of the data is performed at a predetermined timing. Therefore, one or more pieces of data, which are designated by the first command after the writing processing is performed at the predetermined timing and before next writing processing is performed, are written into the storage device 14 at once at a next writing timing. Therefore, when various factors, such as a momentary interruption of the power supply device 20 or an impact on the vehicle 1, occur after the first command is executed and before the writing processing is actually performed, there is a concern that the data designated by the first command is not written into the storage device 14.

Therefore, the integration application 120 executes a second command after executing the first command. The second command is a command to immediately execute the writing of the designated data into the storage device 14, which is performed by the execution of the first command.

### Regarding Integration Application 120: Reading Processing

Hereinafter, reading processing of the integration application 120 will be described. In general, data having a high importance is requested to be appropriately read from the storage device 14 at a reading timing. The reading timing is, for example, a timing at which the power switch of the vehicle 1 is turned on. The integration application 120 reads the integrated data from the storage device 14 at the reading timing. The integration application 120 outputs each of the pieces of data included in the read integrated data to a corresponding program. For example, each of the pieces of data collected from each of the applications 121 includes identification information for identifying the corresponding application 121. The integration application 120 specifies the corresponding application 121 based on the identification information in each of the pieces of data included in the integrated data, and outputs the data to the specified application 121.

### Regarding Write Confirmation Flag

Hereinafter, a write confirmation flag will be described. As described above, the writing processing to the storage device 14 is executed by the first command and the second command. As described above, the writing processing may fail because of various factors, such as a momentary interruption of the power supply device 20 or an impact on the vehicle 1. The integration application 120 stores a write confirmation flag indicating whether or not the writing processing has been successful in the storage device 14. The integration application 120 manages the information stored in the storage device 14 based on the write confirmation flag.

The integration application 120 turns the write confirmation flag to OFF at the collecting timing. The integration application 120 acquires a return value indicating an execution result of the second command after the execution of the second command at the collecting timing. The return value of the second command indicates whether the writing processing to the storage device 14 has been successful. When the acquired return value indicates that the writing processing to the storage device 14 has failed, the integration application 120 does not update the write confirmation flag and keeps the write confirmation flag OFF. On the other hand, when the acquired return value indicates that the writing processing to the storage device 14 has been successful, the integration application 120 updates the write confirmation flag to ON and stores the write confirmation flag in the storage device 14. By the processing, the write confirmation flag represents the execution result of the second command.

### Regarding First State Information and Second State Information

Hereinafter, first state information and second state information will be described. As described above, the writing processing of the data to the storage device 14 may fail. The data stored in the storage device 14 may be unified to the data before the writing processing, rather than being in an inappropriate state due to the failure. Here, the inappropriate state due to the failure is a state in which a part of the data remains the same as the data before the writing processing, and a part of the rest is updated to the data after the writing processing. That is, the data stored in the storage device 14 may maintain atomicity.

In association with this, the storage device 14 stores two pieces of information, that is, the first state information that is data before the execution of the second command and the second state information that is data after the execution of the second command. Specifically, the integration application 120 stores the integrated data in the storage device 14 as the second state information in association with the execution of the second command. In this case, when the writing processing of the second state information has failed, the integration application 120 does not update the first state information and leaves the first state information as it is. On the other hand, when the writing processing of the second state information has been successful, the integration application 120 updates the content of the first state information with the second state information.

The integration application 120 acquires the write confirmation flag from the storage device 14 at the reading timing. The integration application 120 determines whether the writing processing has been successful at the previous collecting timing based on the acquired write confirmation flag. When the write confirmation flag is OFF, the integration application 120 reads the first state information because the integrated data as the second state information may be in the inappropriate state. That is, the integration application 120 reads the integrated data stored in the storage device 14 before the execution of the previous writing processing. On the other hand, when the write confirmation flag is ON, the integration application 120 determines that the integrated data as the second state information has been appropriately stored and reads the second state information.

### Writing Processing of Information Processing Device 10

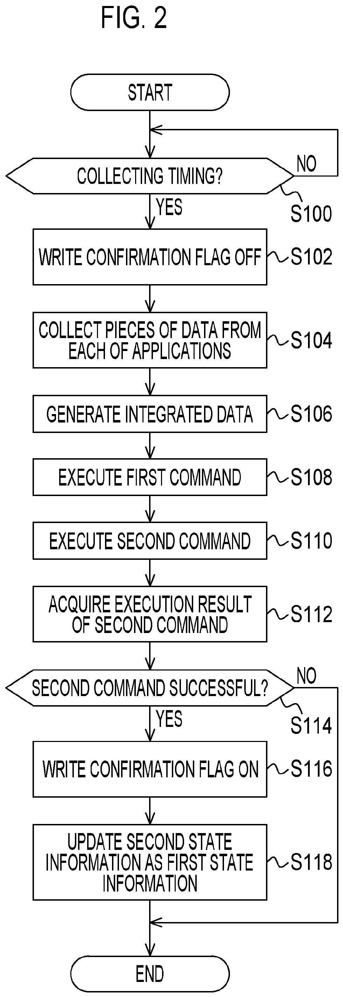

As shown in FIG. 2, the integration application 120 determines whether the collecting timing has been reached (S 100). When the integration application 120 determines that the collecting timing has not been reached (S 100: NO), the integration application 120 repeats determination processing of S 100 until the collecting timing is reached. When the integration application 120 determines that the collecting timing has been reached (S100: YES), the integration application 120 updates the write confirmation flag to OFF (S102). Next, the integration application 120 collects each of the pieces of data from each of the applications 121 (S104). Next, the integration application 120 integrates the collected data into one piece of integrated data (S 106).

Next, the integration application 120 executes the first command on the integrated data (S 108). Next, the integration application 120 executes the second command (S 1 10). Next, the integration application 120 acquires a return value indicating the execution result of the second command (S 112). Next, the integration application 120 determines whether the writing processing of the data to the storage device 14 has been successful based on the acquired return value (S 114). When the integration application 120 determines that the writing processing has failed (S 1 14: NO), the integration application 120 keeps the write confirmation flag OFF without updating the write confirmation flag and ends a series of processing. When the integration application 120 determines that the writing processing has been successful (S 114: YES), the integration application 120 updates the write confirmation flag to ON (S 1 16). Next, the integration application 120 updates the content of the first state information with the second state information (S 118).

### Writing Processing of Information Processing Device 10

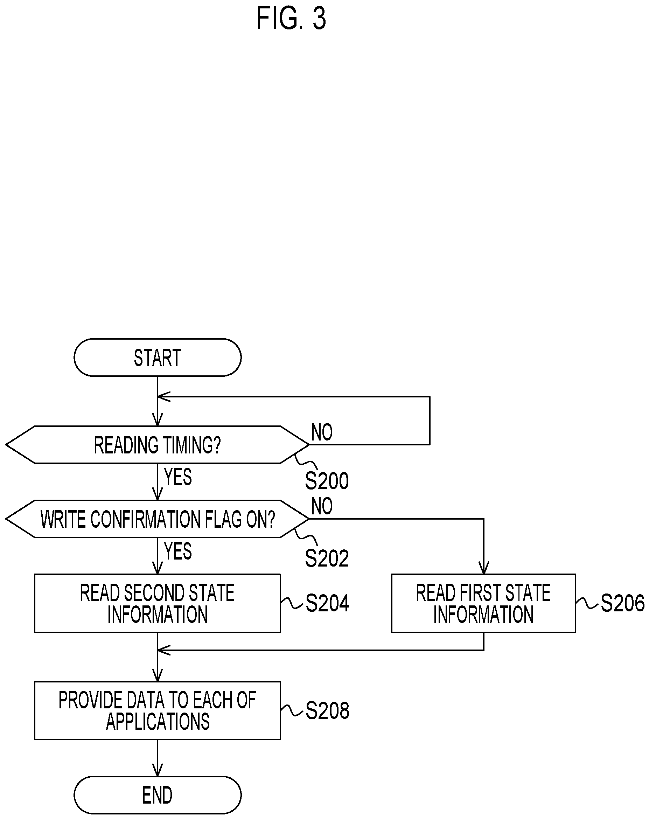

As shown in FIG. 3, the integration application 120 determines whether the reading timing has been reached (S200). When the integration application 120 determines that the reading timing has not been reached (S200: NO), the integration application 120 repeats determination processing of S200 until the reading timing is reached. When the integration application 120 determines that the reading timing has been reached (S200: YES), the integration application 120 determines whether the write confirmation flag acquired from the storage device 14 is ON (S202).

When the write confirmation flag is ON (S202: YES), the integration application 120 determines that the writing processing has been appropriately performed on the integrated data as the second state information and reads the second state information (S204). When the write confirmation flag is OFF (S202: NO), the integration application 120 reads the first state information since there is a possibility that the integrated data as the second state information is in the inappropriate state (S206). The integration application 120 provides each of the pieces of data included in the read integrated data to the corresponding application 121 (S208).

### Action and Effect of Embodiment

According to the above-described embodiment, the following actions and effects can be obtained.
(1) The information processing device 10 is a device that is mounted on the vehicle 1 and is configured to manage the storage device 14 on which data is rewritable on a cell-by-cell basis. The integration application 120 is executed on the CPU 11 of the information processing device 10. The integration application 120 collects the pieces of data from each of the applications 121 executed in the vehicle 1 at the collecting timing. The integration application 120 integrates the collected pieces of data into the integrated data. The integration application 120 executes the first command to request the writing of the integrated data into the storage device 14. The integration application 120 executes the second command to immediately execute the writing of the integrated data into the storage device 14 based on the first command.

Here, when the integration application 120 does not integrate the pieces of data of each of the applications 121, each of the applications 121 performs the writing processing of data to the storage device 14 at the collecting timing. In this example, a case where three applications 121 are implemented in the information processing device 10 has been described. The larger the number of functions is, the more frequently the writing processing of data to the storage device 14 at the collecting timing is performed. Therefore, when the pieces of data are not integrated, it is not possible to suppress an increase in the number of times of writing from being increased.

In contrast, the integration application 120 integrates the plurality of pieces of data to obtain one piece of integrated data. Further, in the storage device 14, the writing processing is performed solely for the one piece of integrated data integrated by the integration application 120 at the collecting timing. As a result, the information processing device 10 can reduce an execution frequency of writing data into the storage device 14 as a NAND type flash memory.

In addition, as described above, the storage device 14 is a non-volatile memory in which data can be electrically rewritten on a cell-by-cell basis. Here, when a size of the data written in a cell is sufficiently smaller than a storage capacity of the cell, the storage capacity of the cell is surplus. When the integration application 120 does not integrate the pieces of data of each of the applications 121, each of the applications 121 performs the writing processing of the data to each cell of the storage device 14 at the collecting timing. In this case, the storage capacity of the cell is more likely to be surplus in the storage device 14 than the capacity is when the integrated data is stored.

With such a configuration, the information processing device 10 can efficiently use the storage area of the cell of the storage device 14 by storing the integrated data obtained by integrating the pieces of data of the applications 121 in the cell.

(2) The collecting timing includes a timing at which the power switch of the vehicle 1 is turned off. In general, the applications 121 implemented in the information processing device 10 execute processing of writing data into the storage device 14 when the power switch is turned off. With such a configuration, the information processing device 10 can suppress an increase in the number of times of writing data into the storage device 14 at a timing at which the writing processing is generally performed.

(3) The integration application 120 reads the integrated data from the storage device 14 at the reading timing. The integration application 120 provides data to each of the applications 121 based on the integrated data. In addition, the reading timing includes a timing at which the power switch is turned on.

In general, the applications 121 implemented in the information processing device 10 execute processing of reading data from the storage device 14 when the power switch is turned on. In this case, when each of the applications 121 performs the reading processing of data, a waiting time for the reading processing may be long.

With such a configuration, the information processing device 10 can efficiently execute the reading processing at the timing at which the reading processing is generally executed by reading the integrated data from the storage device 14 at once.

(4) The storage device 14 is configured to store the first state information indicating the state of the storage device 14 before the execution of the second command and the second state information indicating the state of the storage device 14 after the execution of the second command. The integration application 120 acquires the write confirmation flag when the integrated data is read from the storage device 14. The integration application 120 reads the second state information when the write confirmation flag indicates success of the second command. The integration application 120 reads the first state information when the write confirmation flag indicates failure of the second command. With such a configuration, the information processing device 10 can maintain the atomicity of the data stored in the storage device 14 even when the writing processing has failed.

Each of the embodiments described above may be modified as follows. The above embodiment and the following other examples may be combined with each other within a range that does not cause a technical contradiction.
· In the above, a case where the collecting timing is a point in time when the power switch is turned off and the reading timing is a point in time when the power switch is turned on has been described, but the present invention is not limited thereto. The collecting timing and the reading timing may be other timings.

As described above, the supply mode of power of the power supply device 20 includes the constant power mode and the auxiliary power mode. The power supply device 20 switches the supply mode from the constant power mode to the auxiliary power mode when the user approaches vicinity of the vehicle 1, and switches the supply mode from the auxiliary power mode to the constant power mode when the user moves away from the vicinity of the vehicle 1.

The collecting timing may be a timing at which the supply mode is switched from the auxiliary power mode to the constant power mode or a timing at which the supply mode is switched from the constant power mode to the auxiliary power mode. In general, the applications 121 implemented in the information processing device 10 execute the processing of writing data into the storage device 14 when a voltage supply source is changed. With such a configuration, the information processing device 10 can suppress an increase in the number of times of writing data into the storage device 14 at a timing at which the writing processing is generally performed.

In a vehicle in which a constant power mode and an auxiliary power mode are provided as the supply mode of power from the power supply device 20, a physical power switch of the vehicle, such as an ignition switch, need not be provided.

. The vehicle may be a vehicle in which the auxiliary power mode is not prepared as the supply mode of power from the power supply device 20.
· In the above, a case where the vehicle 1 includes one information processing device 10 has been described, but the present invention is not limited thereto. The vehicle 1 may include a plurality of information processing devices 10. In this case, the information processing devices 10 are connected with each other via in-vehicle communication, such as a controller area network (CAN), a local interconnect network (LIN), and FlexRay. The integration application 120 collects pieces of data from an application 121 implemented in another information processing device 10 via the in-vehicle communication, and performs writing processing of integrated data obtained by integrating the collected pieces of data to the storage device 14.

· The pieces of data collected by the integration application 120 at the collecting timing may include other pieces of data in addition to the data having a high importance.
· The applications 121 other than the integration application 120, which are stored in the ROM 12, may be two or more applications 121 or may be four or more applications 121, as long as there are a plurality of applications 121.

## Claims

1. An information processing device mounted on a vehicle, the information processing device comprising a storage device on which data is rewritable on a cell-by-cell basis,
wherein the information processing device is configured to
manage the storage device, and
execute
collecting pieces of data from each of a plurality of applications executed in the vehicle at a collecting timing,
integrating the collected pieces of data into one piece of integrated data,
executing a first command to request writing of the integrated data into the storage device, and
executing a second command to immediately execute the writing of the integrated data into the storage device based on the first command.

2. The information processing device according to claim 1, wherein the collecting timing includes a timing at which a power switch of the vehicle is turned off.

3. The information processing device according to claim 1, wherein:
a constant power mode and an auxiliary power mode are prepared as a supply mode of power;
the number of in-vehicle devices powered from a power source is larger when the auxiliary power mode is selected as the supply mode than the number is when the constant power mode is selected as the supply mode;
the supply mode is switched from the constant power mode to the auxiliary power mode when a user approaches vicinity of the vehicle, and the supply mode is switched from the auxiliary power mode to the constant power mode when the user moves away from the vicinity of the vehicle; and
the collecting timing includes a timing at which the supply mode is switched from the auxiliary power mode to the constant power mode.

4. The information processing device according to claim 1, wherein the information processing device is configured to execute
reading the integrated data from the storage device at a reading timing, and
providing the data to each of the applications based on the integrated data.

5. The information processing device according to claim 1, wherein:
the storage device is configured to store first state information indicating a state of the storage device before the execution of the second command and second state information indicating a state of the storage device after the execution of the second command; and
the information processing device is configured to execute
acquiring an execution result of the second command when the integrated data is read from the storage device, and
reading the second state information when the execution result indicates success of the second command and reading the first state information when the execution result indicates failure of the second command.
